# EUROPÄISCHE PATENTANMELDUNG

(11) **EP 2 090 970 A1**
(43) Veröffentlichungstag der Anmeldung: **19.08.2009**
(21) Anmeldenummer: 08002774.1
(22) Anmeldetag: 14.02.2008
(51) Int. Cl.: G06F 3/048

(54) **Verfahren zum Betrieb eines elektronischen Gerätes, insbesondere Programmiergerätes, Computerprogramm zur Implementierung des Verfahrens und Programmiergerät mit einem solchen Computerprogramm**

(71) Anmelder: SIEMENS AKTIENGESELLSCHAFT, 80333 München (DE)
(72) Erfinder: Klatte, Wiebke, 49356 Diepholz (DE); Rohr, Anette, 76135 Karlsruhe (DE); Wittenberg, Carsten, 91564 Neuendettelsau (DE)

(57) **Zusammenfassung**

Verfahren zum Betrieb eines elektronischen Gerätes, insbesondere Programmiergerätes, Computerprogramm zur Implementierung des Verfahrens und Programmiergerät mit einem solchen Computerprogramm

Es wird ein Verfahren zum Betrieb eines elektronischen Gerätes angegeben, mit dem die Interaktion mit einem durch das Gerät ausgeführten Steuerprogramm (12) erleichtert werden soll, wobei zur Veränderung von von dem Computerprogramm (12) verwalteten Daten (18) ein jeweils darstellbares Menue (30) vorgesehen ist, wobei das Menue (30) für ein zum Verändern ausgewähltes Datum jeweils nur Einträge (32) für in einem Kontext des jeweiligen Datums veränderbare Eigenschaften umfasst.

## Beschreibung

Die Erfindung betrifft ein Verfahren zum Betrieb eines elektronischen Gerätes, insbesondere eines Programmiergerätes. Konkret betrifft die Erfindung ein Verfahren zum Betrieb eines solchen Gerätes, welches zur Interaktion mit einem Anwender mittels eines Computerprogramms eine Anzeigeeinrichtung ansteuert, wobei mittels der Anzeigeeinrichtung von dem Computerprogramm verwaltete Daten, die computerprogrammintern als Kollektion von Datenobjekten organisiert sind, angezeigt werden und ergänz- oder veränderbar sind, wobei einzelne Veränderungen unter Verwendung eines mittels der Anzeigeeinrichtung darstellbaren Menues vorgenommen werden.

Derartige Verfahren sind an sich bekannt. Zum Beispiel liefert die Anmelderin zu ihrem unter der Marke SIMATIC bekannten Automatisierungssystem in diversen Ausführungen Programmiergeräte, mit denen Automatisierungslösungen in der beschriebenen Art und Weise ergänz- oder veränderbar sind, wobei einzelne Veränderungen unter Verwendung eines mittels der Anzeigeeinrichtung eines solchen Programmiergerätes darstellbaren Menues vorgenommen werden. Die von dem Programmiergerät verwalteten Daten sind dabei insbesondere Daten, die sich auf eine konkrete Definition einer Automatisierungslösung, also z. B. ein Anwenderprogramm in einer automatisierungsspezifischen Programmiersprache, beziehen. Eine solche Automatisierungslösung umfasst z. B. einzelne bei deren Formulierung üblicherweise verwendete Programmcodeelemente, nämlich Netzwerke, Funktionsblöcke, usw., als Datenobjekte. Insgesamt beschreibt die Automatisierungslösung eine Ableitung von Steuerbefehlen für einen gesteuerten und/oder überwachten technischen Prozess aus Prozesszuständen und internen Verknüpfungen. Neben den zuvor beschriebenen elektronischen Geräten ist es auch möglich und wird auch von der Anmelderin angeboten, eine Programmiergerätesoftware für Standardcomputer, also z. B. Personalcomputer und dergleichen, zu erwerben, wobei mit einem Betrieb einer solchen Programmiergerätesoftware auf einem derartigen Computer der Computer ebenfalls zu einem elektronischen Gerät oder einem Programmiergerät in der hier gewählten Terminologie wird.

Noch nicht ganz optimal bei derartigen Geräten ist, dass mit einem stetig steigenden Funktionsumfang die jeweils darstellbaren Menues teilweise erheblichen Umfang annehmen und daher unübersichtlich werden.

Darstellbare Menues als Schnittstelle zum Funktionsumfang eines Computerprogramms sind in unterschiedlichen Ausprägungen bekannt. Die bekanntesten Darstellungsformen von Menues sind Menueleisten, Pulldown-Menues und Symbolleisten oder Toolbars. Wenn nicht anders angegeben, sind von dem hier verwendeten Begriff "Menue" sämtliche Ausführungsformen zur Darstellung eines Menues umfasst.

Es ist bereits, allerdings in einem anderen Anwendungsszenario, vorgeschlagen worden, als durch die Anzeigeeinrichtung darstellbare Menues so genannte Kontextmenues zu verwenden, die sich also auf ein jeweils zu veränderndes Datenobjekt beziehen und im Vergleich zu der Gesamtfunktionalität der jeweiligen Software nur einen reduzierten Funktionsumfang zugänglich machen. Dies ist insbesondere bei Computerprogrammen für die Büroautomatisierung, also Textverarbeitung, Tabellenkalkulation, usw., gebräuchlich.

Bei neueren Versionen eines weit verbreiteten Textverarbeitungsprogramms ist als weitere Darstellungsform eines Menues das Konzept eines so genannten Floatys bekannt geworden. Floaties sind Ausschnitte einer Symbolleiste, welche unmittelbar nach dem Erzeugen oder Markieren eines Datenobjektes dargestellt werden. Mit einem Floaty können elementare Eigenschaften, wie z. B. Schriftart, Schriftfarbe, usw., des jeweiligen von der Textverarbeitung verwalteten Datenobjektes unmittelbar am Objekt angepasst werden. Ein Floaty erscheint bei einer Markierung eines Textes oder Objektes an der rechten oberen Ecke der jeweiligen Markierung. Das Floaty wird zunächst langsam eingeblendet und wird erst füllend gezeichnet, wenn der Anwender mit der Maus über das Floaty fährt. Sonst wird es unmittelbar ausgeblendet. Wird zu dem jeweiligen Datenobjekt das Kontextmenue aufgerufen, erscheint das Floaty füllend gezeichnet darüber. Für ein und dasselbe Computerprogramm, also z. B. einerseits eine Textverarbeitung und andererseits eine Tabellenkalkulation, ändert sich die Anzahl der in einem Floaty angezeigten Funktionen nicht. Funktionen, die im jeweiligen Kontext nicht verfügbar sind, werden inaktiv dargestellt.

Auch diese Lösung ist noch nicht optimal, weil mit den inaktiv dargestellten, nicht verfügbaren Funktionen immer noch die schnelle Übersicht über den mittels eines Menues erreichbaren Funktionsumfang unnötig erschwert wird.

Eine Aufgabe der vorliegenden Erfindung besteht entsprechend darin, ein Verfahren zum Betrieb von Geräten der oben genannten Art anzugeben, bei dem die oben skizzierten Nachteile vermieden oder zumindest hinsichtlich ihrer Auswirkungen reduziert werden.

Dazu ist bei einem Verfahren der eingangs genannten Art vorgesehen, dass das Menue für ein zum Verändern ausgewähltes Datenobjekt jeweils nur Einträge für in einem Kontext des jeweiligen Datenobjektes veränderbare Eigenschaften umfasst. Abgestellt auf die zuvor beschriebenen Floaties als spezielle Ausführungsform eines Menues für ein zum Verändern ausgewähltes Datenobjekt bedeutet dies, dass die Darstellung von im Kontext nicht verfügbaren Funktionen komplett unterbleibt, sodass der durch das Menue zur Verfügung gestellte Funktionsumfang auf ein Minimum begrenzt ist. Dies erleichtert die schnelle Übersicht über das jeweilige Menue und das Erfassen der dadurch bereitgestellten Optionen.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Vorteilhaft ist vorgesehen, dass das Menue als Globaleintrag einen Eintrag zum Aufrufen eines Globalmenues mit vorgegebenen oder vorgebbaren Globalmenueeinträgen für häufig genutzte Funktionen, die insbesondere auf die von dem Computerprogramm verwalteten Daten insgesamt wirken, umfasst. Der Globaleintrag ist also ein Eintrag, der zu den vorgenannten Einträgen hinzukommt und sich zwar nicht unmittelbar auf in einem Kontext des jeweiligen Datenobjektes veränderbare Eigenschaften bezieht, dennoch einen schnellen Zugang zu häufig genutzten Funktionen bereitstellt und insoweit die Bedienung des elektrischen Gerätes, also dessen Betrieb, erleichtert.

Zusätzlich oder alternativ ist vorgesehen, dass das Menue als Navigationseintrag einen Eintrag zum Aufrufen eines Navigationsmenues mit Navigationsmenueeinträgen zum Navigieren in einer oder einzelnen Darstellungen der von dem Computerprogramm verwalteten Daten umfasst. Analog zu dem Globaleintrag kommt also der Navigationseintrag zusätzlich zu den Einträgen, die im Kontext des jeweiligen Datenobjektes eine Beeinflussung veränderbarer Eigenschaften ermöglichen, hinzu, wobei mit dem Navigationseintrag ein verbessertes Navigieren in einer Darstellung der Daten oder eine Umschaltung der Darstellungsart möglich wird.

Besonders bevorzugt ist vorgesehen, dass das Globalmenue und/oder das Navigationsmenue in einer Kreisform dargestellt werden, wobei die einzelnen Globalmenueeinträge bzw. Navigationsmenueeinträge in Form von Kreissektoren oder in Form von Kreissektorabschnitten dargestellt werden. Auf diese Art wird das Global- oder Navigationsmenue von dem zunächst dargestellten Menue auch optisch leicht unterscheidbar. Zudem eignet sich eine Darstellung in Kreisform besonders gut zur Darstellung von Gegensätzen, also z. B. im Falle des Globalmenues zur Darstellung von Menueeinträgen zum Öffnen oder Schließen einer die Daten umfassenden Datei auf gegenüberliegenden Seiten der Kreisform.

Besonders bevorzugt ist vorgesehen, dass bei einer Darstellung der Globalmenueeinträge oder Navigationsmenueeinträge in Form von Kreissektorabschnitten in der Mitte der Kreisform des Global- bzw. Navigationsmenues zur leichten Identifizierbarkeit desselben jeweils ein Globalmenuesymbol bzw. Navigationsmenuesymbol dargestellt wird. Die Verwendung eines solchen leicht identifizierbaren Symbols erleichtert die bessere Unterscheidbarkeit von Global- und Navigationsmenue und verbessert die intuitive Bedienbarkeit des jeweiligen Gerätes oder des darauf implementierten Computerprogramms.

Weiter bevorzugt ist vorgesehen, dass der Global- und/oder Navigationseintrag entlang einer linken Seitenlinie des zum Verändern eines Datenobjektes dargestellten Menues angeordnet ist. Der Global- oder Navigationseintrag ist dann für alle derartigen Menues an einer stets gleich bleibenden relativen Position dargestellt, was den Bedienkomfort nochmals erhöht.

Wenn bei einer Selektion des Global- oder Navigationseintrags eine Darstellung des Global- bzw. Navigationsmenues zumindest teilweise die Darstellung des zunächst aufgerufenen Menues überlagert, wird die Übersicht über die zu verändernden, von dem Computerprogramm verwalteten Daten nur in vergleichsweise geringem Umfang während der Darstellung dieser Menues behindert.

Das vorstehend beschriebene und nachfolgend weiter erläuterte Verfahren wird bevorzugt in Software implementiert, sodass die Erfindung auch ein Computerprogramm mit durch einen Computer, insbesondere ein Programmiergerät der eingangs beschriebenen Art, ausführbaren Programmcodeanweisungen zur Implementierung des Verfahrens betrifft. Weiterhin betrifft die Erfindung damit auch ein Computerprogrammprodukt, insbesondere ein Speichermedium in grundsätzlich beliebiger Ausführungsform, mit einem durch einen Computer, insbesondere ein Programmiergerät, ausführbaren derartigen Computerprogramm. Schließlich betrifft die Erfindung auch ein derartiges Programmiergerät mit einem solchen Computerprogramm, also insbesondere ein Programmiergerät, auf dem ein derartiges Computerprogramm geladen ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die z. B. durch Kombination oder Abwandlung von einzelnen, in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

### Es zeigen:

- FIG 1: ein Programmiergerät mit Anzeigeeinrichtung,
- FIG 2: das Programmiergerät aus FIG 1 mit einem auf dessen Anzeigeeinrichtung dargestellten Menue zum Verändern von von dem Programmiergerät verwalteten Daten und
- FIG 3: eine Darstellung eines Menues, wie von der Erfindung vorgeschlagen.

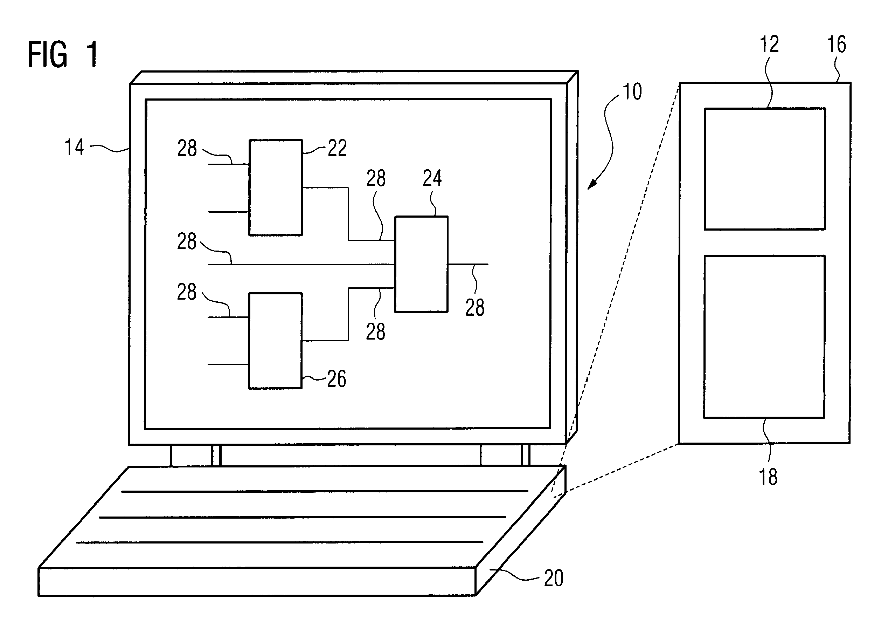

FIG 1 zeigt eine schematisch vereinfachte Darstellung eines insgesamt mit 10 bezeichneten Programmiergerätes als Beispiel für ein elektronisches Gerät, welches zur Interaktion mit einem Anwender mittels eines Computerprogramms 12 eine Anzeigeeinrichtung 14, also z. B. einen Computermonitor, insbesondere in Form eines LCD- oder TFT-Displays, ansteuert. Das Computerprogramm 12 ist dabei in an sich bekannter Art und Weise in einem von dem Programmiergerät 10 umfassten Speicher 16 vorgehalten. Der Speicher 16 ist, obwohl aus Gründen der Übersichtlichkeit neben dem Programmiergerät 10 dargestellt, natürlich von dem Programmiergerät 10 umfasst und insoweit von einem Gehäuse dieses Gerätes ebenfalls umschlossen, was durch die gestrichelten Linien dargestellt werden soll.

Mittels der Anzeigeeinrichtung 14 sind von dem Computerprogramm 12 verwaltete Daten 18 anzeigbar, wie in der Darstellung in FIG 1 ebenfalls gezeigt ist. Mit dem Anzeigen solcher Daten 18 werden diese in üblicher Art und Weise ergänz- oder veränderbar, z. B. im Wege entsprechender Eingaben über eine Tastatur 20 oder übliche andere Eingabegeräte, wie Maus und dergleichen (nicht dargestellt). Die Daten 18 stellen z. B. eine Kodierung von Programmcodeanweisungen zur Definition einer Automatisierungslösung zur Steuerung und/oder Überwachung eines nicht dargestellten technischen Prozesses dar. Beispielhaft in FIG 1 sind dabei als von den Daten 18 umfasste Datenobjekte so genannte Funktionsblöcke 22, 24, 26 gezeigt. Eine Verschaltung 28 solcher Funktionsblöcke 22-26 gehört ebenfalls zu den Daten 18. Diese und evtl. andere oder weitere Datenobjekte werden von dem Computerprogramm 12 verwaltet.

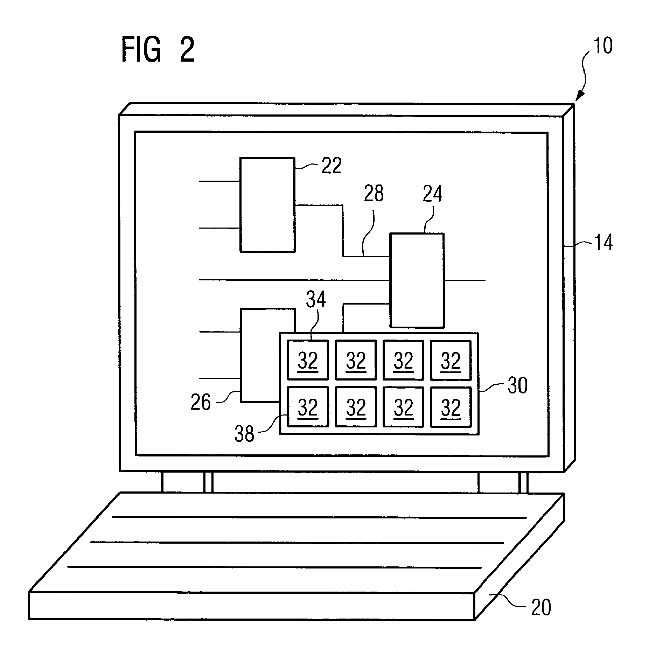

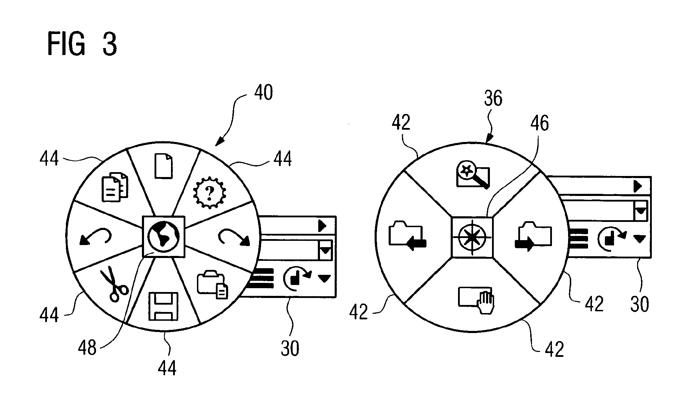

FIG 2 zeigt in im Prinzip gleicher Darstellung wie FIG 1 nochmals das Programmiergerät 10 mit der Anzeigeeinrichtung 14, wobei auf dieser einerseits einzelne Datenobjekte und andererseits zur Veränderung eines dieser Datenobjekte ein nur aus Gründen der Übersichtlichkeit übertrieben groß gezeigtes Menue 30 dargestellt ist. Das Menue 30 umfasst für ein zum Verändern ausgewähltes Datenobjekt, also z. B. den von dem Menue 30 teilweise verdeckten Funktionsbaustein 26, nur Einträge 32 für in einem Kontext des jeweiligen Datenobjektes veränderbare Eigenschaften, also z. B. um den Funktionsbaustein 26 von einer Funktionalität zur logischen UND-Verknüpfung in eine Funktionalität zur logischen ODER-Verknüpfung umzuwandeln, oder Ähnliches. Daneben umfasst bei der dargestellten Funktionalität das Menue 30 als Globalmenueeintrag 34 einen Eintrag 32 zum Aufrufen eines Globalmenues 36 (FIG 3). Daneben umfasst das Menue 30 in der dargestellten Ausführungsform als Navigationseintrag 38 einen Eintrag 32 zum Aufrufen eines Navigationsmenues 40 (FIG 3).

In FIG 3 sind beispielhafte Designs eines Globalmenues 36 und eines Navigationsmenues 40 gezeigt. Das Globalmenue 36 umfasst vorgegebene oder vorgebbare Globalmenueeinträge 42 für häufig genutzte Funktionen, die insbesondere auf die Daten 18 (FIG 1) insgesamt wirken, also z. B. zum Speichern der Daten 18 auf einem Datenträger (nicht gezeigt). Das Navigationsmenue 40 umfasst Navigationsmenueeinträge 44 zum Navigieren in einer oder einzelnen Darstellungen der Daten 18.

Wie gezeigt, ist das Globalmenue 36 und/oder das Navigationsmenue 40 in einer Kreisform darstellbar, wobei die einzelnen Globalmenueeinträge 42 bzw. Navigationsmenueeinträge 44 in Form von Kreissektoren oder in Form von Kreissektorenabschnitten dargestellt werden, sodass z. B. "entgegengesetzte" Funktionalitäten im Globalmenue 36 oder Navigationsmenue 40 auf gegenüberliegenden Seiten der Kreisform darstellbar sind (Beispiele für "entgegengesetzte Funktionalitäten im Globalmenue 36" sind Globalmenueeinträge 42 zum Laden oder Speichern einer Daten 18 umfassenden Datei und im Falle des Navigationsmenues 40 Navigationsmenueeinträge 44 zum Vorwärts- oder Rückwärtsblättern in einzelnen Darstellungen der Daten 18).

Wie in FIG 3 dargestellt ist, umfasst das Globalmenue 36 oder das Navigationsmenue 40 bei einer Darstellung der Globalmenue- bzw. Navigationsmenueeinträge 42, 44 in Form von Kreissektorabschnitten in der Mitte der Kreisform zur leichten Identifizierbarkeit des Global- oder Navigationsmenues 36, 40 jeweils ein Globalmenuesymbol bzw. Navigationsmenuesymbol 46, 48. Ein derartiges Global- oder Navigationsmenuesymbol 46, 48 macht die jeweiligen Menues 36, 40 leicht identifizierbar und das Programmiergerät 10 (FIG 1) damit intuitiv bedienbar.

Wie bereits anhand der Darstellung in FIG 2 ersichtlich ist, sind der Global- oder Navigationseintrag 34, 38 bei einer bevorzugten Ausführungsform entlang einer linken Seitenlinie des Menues 30 dargestellt, sodass sich bei unterschiedlichen Menues 30, also bei Menues 30 mit einer unterschiedlichen Anzahl oder Abfolge von Einträgen 32, stets eine gleiche Position für den Global- oder Navigationseintrag 34, 38 ergibt, was ebenfalls die Bedienbarkeit des Programmiergerätes 10 erleichtert. Wenn, wie in FIG 3 dargestellt, bei einer Selektion des Global- oder Navigationseintrags 34, 38 eine Darstellung des Global- bzw. Navigationsmenues 36, 40 zumindest teilweise die Darstellung des Menues 30 überlagert, verdeckt das Global- oder Navigationsmenue 36, 40 im Wesentlichen nur das darunter liegende Menue 30, das seinerseits bereits die auf der Anzeigeeinrichtung 14 dargestellten Datenobjekte 22-26 teilweise verdeckt hat. Die Verhinderung auf die Sicht der dargestellten Daten 18 wird also durch die zusätzliche Darstellung des Global- oder Navigationsmenues 36, 40 neben dem zunächst aufgerufenen Menue 30 nur unwesentlich behindert.

Zusammenfassend lässt sich die vorliegende Erfindung damit wie folgt kurz beschreiben: Es wird ein Verfahren zum Betrieb eines elektronischen Gerätes angegeben, mit dem die Interaktion mit einem durch das Gerät ausgeführten Steuerprogramm 12 erleichtert werden soll, wobei zur Veränderung von von dem Computerprogramm 12 verwalteten Daten 18 ein jeweils darstellbares Menue 30 vorgesehen ist, wobei das Menue 30 für ein zum Verändern ausgewähltes Datum 18 jeweils nur Einträge 32 für in einem Kontext des jeweiligen Datums 18 veränderbare Eigenschaften umfasst.

## Patentansprüche

1. Verfahren zum Betrieb eines elektronischen Gerätes, insbesondere eines Programmiergerätes (10), welches zur Interaktion mit einem Anwender mittels eines Computerprogramms (12) eine Anzeigeeinrichtung (14) ansteuert,
wobei mittels der Anzeigeeinrichtung (14) von dem Computerprogramm (12) verwaltete Daten (18), die computerprogrammintern als Kollektion von Datenobjekten (22, 24, 26) organisiert sind, angezeigt werden und ergänz- oder veränderbar sind,
wobei einzelne Veränderungen unter Verwendung eines mittels der Anzeigeeinrichtung (14) darstellbaren Menues (30) vorgenommen werden,
**dadurch gekennzeichnet, dass** das Menue (30) für ein zum Verändern ausgewähltes Datenobjekt (22) jeweils nur Einträge (32) für in einem Kontext des jeweiligen Datenobjektes (22-26) veränderbare Eigenschaften umfasst.

2. Verfahren nach Anspruch 1, wobei das Menue (30) als Globaleintrag (34) einen Eintrag (32) zum Aufrufen eines, Globalmenues (36) mit vorgegebenen oder vorgebbaren Globalmenueeinträgen (42) für häufig genutzte Funktionen, die insbesondere auf die Daten (18) insgesamt wirken, umfasst.

3. Verfahren nach Anspruch 1 oder 2, wobei das Menue (30) als Navigationseintrag (38) einen Eintrag (32) zum Aufrufen eines Navigationsmenues (40) mit Navigationsmenueeinträgen (44) zum Navigieren in einer oder einzelnen Darstellungen der Daten (18) umfasst.

4. Verfahren nach Anspruch 2 oder 3, wobei das Globalmenue (36) und/oder das Navigationsmenue (40) in einer Kreisform dargestellt wird, wobei die einzelnen Globalmenueeinträge (42) bzw. Navigationsmenueeinträge (44) in Form von Kreissektoren oder in Form von Kreissektorabschnitten dargestellt werden.

5. Verfahren nach Anspruch 4, wobei bei einer Darstellung der Globalmenueeinträge (42) bzw. Navigationsmenueeinträge (44) in Form von Kreissektorabschnitten in der Mitte der Kreisform des Global- bzw. des Navigationsmenues (36, 40) zur leichten Identifizierbarkeit derselben jeweils ein Globalmenuesymbol (46) bzw. Navigationsmenuesymbol (48) dargestellt wird.

6. Verfahren nach einem der Ansprüche 2 bis 5, wobei der Global- und/oder Navigationseintrag (34, 38) entlang einer linken Seitenlinie des Menues (30) dargestellt werden.

7. Verfahren nach einem der Ansprüche 2 bis 6, wobei bei einer Selektion des Global- oder Navigationseintrags (34, 38) eine Darstellung des Global- bzw. Navigationsmenues (36, 40) zumindest teilweise die Darstellung des Menues (30) überlagert.

8. Computerprogramm mit durch einen Computer, insbesondere ein Programmiergerät (10), ausführbaren Programmcodeanweisungen zur Implementierung des Verfahrens nach einem der Ansprüche 1 bis 7, wenn das Computerprogramm auf einem Computer, insbesondere einem Programmiergerät (10), ausgeführt wird.

9. Computerprogrammprodukt, insbesondere Speichermedium, mit einem durch einen Computer, insbesondere ein Programmiergerät (10), ausführbaren Computerprogramm gemäß Anspruch 8.

10. Programmiergerät (10), auf dem ein Computerprogramm nach Anspruch 8 geladen ist.

## Geänderte Patentansprüche

### Geänderte Patentansprüche gemäss Regel 137(2) EPÜ.

**1.** Verfahren zum Betrieb eines elektronischen Gerätes, insbesondere eines Programmiergerätes (10), welches zur Interaktion mit einem Anwender mittels eines Computerprogramms (12) eine Anzeigeeinrichtung (14) ansteuert,
wobei mittels der Anzeigeeinrichtung (14) von dem Computerprogramm (12) verwaltete Daten (18), die computerprogrammintern als Kollektion von Datenobjekten (22, 24, 26) organisiert sind, angezeigt werden und ergänz- oder veränderbar sind,
wobei einzelne Veränderungen unter Verwendung eines mittels der Anzeigeeinrichtung (14) darstellbaren Menues (30) vorgenommen werden,
**dadurch gekennzeichnet,**
**dass** das Menue (30) für ein zum Verändern ausgewähltes Datenobjekt (22) jeweils nur Einträge (32) für in einem Kontext des jeweiligen Datenobjektes (22-26) veränderbare Eigenschaften umfasst,
**dass** das Menue (30) als Globaleintrag (34) oder Navigationseintrag (38) einen Eintrag (32) zum Aufrufen eines Global- bzw. Navigationsmenues (36, 40) mit vorgegebenen oder vorgebbaren Global- bzw. Navigationsmenueeinträgen (42, 44) für häufig genutzte Funktionen, die insbesondere auf die Daten (18) insgesamt wirken, bzw. zum Navigieren in einer oder einzelnen Darstellungen der Daten (18) umfasst,
**dass** das Globalmenue (36) und/oder das Navigationsmenue (40) in einer Kreisform dargestellt wird, wobei die einzelnen Globalmenueeinträge (42) bzw. Navigationsmenueeinträge (44) in Form von Kreissektoren oder in Form von Kreissektorabschnitten dargestellt werden.

**2.** Verfahren nach Anspruch 1, wobei bei einer Darstellung der Globalmenueeinträge (42) bzw. Navigationsmenueeinträge (44) in Form von Kreissektorabschnitten in der Mitte der Kreisform des Global- bzw. des Navigationsmenues (36, 40) zur leichten Identifizierbarkeit derselben jeweils ein Globalmenuesymbol (46) bzw. Navigationsmenuesymbol (48) dargestellt wird.

**3.** Verfahren nach einem der Ansprüche 1 oder 2, wobei der Global- und/oder Navigationseintrag (34, 38) entlang einer linken Seitenlinie des Menues (30) dargestellt werden.

**4.** Verfahren nach einem der Ansprüche 1, 2 oder 3, wobei bei einer Selektion des Global- oder Navigationseintrags (34, 38) eine Darstellung des Global- bzw. Navigationsmenues (36, 40) zumindest teilweise die Darstellung des Menues (30) überlagert.

**5.** Computerprogramm mit durch einen Computer, insbesondere ein Programmiergerät (10), ausführbaren Programmcodeanweisungen zur Implementierung des Verfahrens nach einem der Ansprüche 1 bis 4, wenn das Computerprogramm auf einem Computer, insbesondere einem Programmiergerät (10), ausgeführt wird.

**6.** Computerprogrammprodukt, insbesondere Speichermedium, mit einem durch einen Computer, insbesondere ein Programmiergerät (10), ausführbaren Computerprogramm gemäß Anspruch 5.

**7.** Programmiergerät (10), auf dem ein Computerprogramm nach Anspruch 5 geladen ist.
